# EUROPEAN PATENT APPLICATION

(11) **EP 1 838 101 A1**
(43) Date of publication of application: **26.09.2007**
(21) Application number: 07102333.7
(22) Date of filing: 14.02.2007
(51) Int. Cl.: H04N 7/167, H04N 5/00

(54) **Method and apparatus for transmitting packets and method and apparatus for combining packets in digital cable broadcasting**

(30) Priority: 21.03.2006 KR 20060025679
(71) Applicant: Samsung Electronics Co., Ltd., Suwon-si 442-742 Gyeonggi-do (KR)
(72) Inventor: Park, Young-min, Seongnam-si (KR)
(74) Representative: Waddington, Richard

(57) **Abstract**

Provided are a method and apparatus for transmitting packets in digital cable broadcasting which transmits a massive amount of data to a cable card at once by combining the packets in the maximum size which does not exceed the data processing capacity of the cable card before the transmission, and which transmits all data from a head end to the cable card for a smooth broadcasting service. Also provided are a method and apparatus for combining packets in digital cable broadcasting.

## Description

Methods and apparatuses consistent with the present invention relate to transmitting packets, and more particularly, to transmitting packets which can effectively transmit data from a head end to a cable card without losing the data and which can prevent overload in a host due to untransmitted data, during an interface between the host of a digital cable broadcasting and the cable card.

As digital cable broadcasting is developed, more services and high quality images are being provided. In digital cable broadcasting, the protection of digital content is very important. However, massive circulation and illegal reproduction of content on the internet is possible by storing the content of digital broadcasting. To prevent massive circulation and illegal reproduction, Conditional Access System (CAS) is used, which scrambles broadcasting streams before transmission so that only authorized persons can receive scrambled broadcasting streams. CAS can be classified into either embodied CAS or separable CAS. In separable CAS, a module called a cable card includes the CAS functions. The cable card receives and transmits data to and from a TV/STB (Set Top Box) to provide required information to the TV/STB and to provide digital cable broadcasting to a TV/STB user. Accordingly, in digital cable broadcasting, an interface between the cable card and TV/STB is very important.

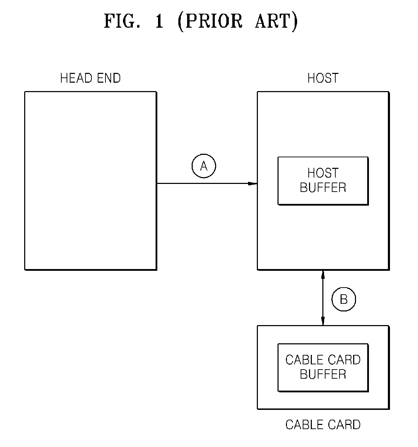

FIG. 1 is a diagram illustrating a conventional apparatus which transmits a DOCSIS Settop Gateway (DSG) packet from a head end to a cable card in digital cable broadcasting.

Referring to FIG. 1, a host receives DSG data from the head end to a host buffer and transmits DSG data stored in the host buffer to the cable card. At this time, a downstream processing rate A, of DSG data transmitted from the head end to the host, is 2 Mbps (Mega bits per second), whereas an actual data processing rate B, between the cable card and the host, is 1 Mbps, although the actual data processing rate B depends on the CPU and/or other system performance. The difference in rate is because the host transmits DSG data from the head end to the cable card after breaking DSG data into DSG packets. When the host transmits DSG data in DSG packets to the cable card, processing rate A is quick whereas processing rate B is slow. When the data packet size is 234 bytes, the host should transmit 1120 DSG packets per second to obtain a processing rate B of 2 Mbps. In other words, to transmit 1120 DGS packets per second, about one DSG packet should access the cable card per 1 ms. However, since the number of DSG packets which can access the cable card is limited, one DSG packet cannot be transmitted per 1 ms. That is, the host is unable to transmit data to the cable card at 1 Mbps. Because the host cannot transmit all of the data to the cable card, the cable card is not able to authorize the transmitted data. Accordingly, the broadcasting service itself or a desired broadcasting service cannot be obtained.

The present invention provides a method and apparatus for effectively transmitting packets, which can transmit massive amounts of DSG data from a host to a cable card at once, and which can reduce overload in a host due to untransmitted data. In other words, the present invention provides a method and apparatus for transmitting all the available data from a head end to the cable card for a smooth broadcasting service.

The present invention also provides a computer readable recording medium recorded having a program recorded thereon to execute the method described in a computer.

According to the present invention there is provided an apparatus and method as set forth in the appended claims. Preferred features of the invention will be apparent from the dependent claims, and the description which follows.

According to an aspect of the present invention, there is provided a method of transmitting packets in a host, the method including: receiving information on the data processing capacity of a card connected to the host from the card; and transmitting packets received from a content provider to the card after combining the packets in the maximum size possible that does not exceed the data processing capacity of the card based on the received information.

According to another aspect of the present invention, there is provided a computer readable recording medium having a program recorded thereon to execute the method described above in a computer.

According to another aspect of the present invention, there is provided a method of combining packets in a host, the method including: receiving information on the data processing capacity of a card connected to the host and data which defines a field of packets used in combining packets from the card; and combining the packets in the maximum size possible that does not exceed the data processing capacity of the card, using the field of packets that corresponds to the received data.

According to another aspect of the present invention, there is provided a computer readable recording medium having a program recorded thereon to execute the described above in a computer.

According to another aspect of the present invention, there is provided an apparatus for transmitting packets in a host, the apparatus including: a first receiver which is operable to receive information on the data processing capacity of a card connected to the host from the card; a second receiver which is operable to receive packets from a content provider; a packet combiner which is operable to combine the packets received from the second receiver in the maximum size possible that does not exceed the data processing capacity of the card received from the second receiver; and a transmitter which is operable to transmit the packets generated in the packet combiner to the card.

According to another aspect of the present invention, there is provided a method of authorizing content in a card, the method including: transmitting information on the data processing capacity of the card to a host connected to the card; receiving packets combined in the maximum size possible that does not exceed the data processing capacity of the card from the host; and authorizing the content after determining whether the host has an authorization of the content using information on the received packets.

According to another aspect of the present invention, there is provided a computer readable recording medium having a program recorded thereon to execute the method described above in a computer.

According to another aspect of the present invention, there is provided an apparatus for authorizing content in a card, the apparatus including: a transmitter which is operable to transmit information on the data processing capacity of the card to a host connected to the card; a receiver which is operable to receive packets combined in the maximum size possible that does not exceed the data processing capacity of the card from the host; and an authorization determiner which is operable to authorize the content after determining whether the host has an authorization of the content using information on the received packets.

For a better understanding of the invention, and to show how embodiments of the same may be carried into effect, reference will now be made, by way of example, to the accompanying diagrammatic drawings in which:
FIG. 1 is a diagram illustrating a conventional apparatus which transmits DSG packet from a head end to a cable card in digital cable broadcasting;
FIG. 2 is a flowchart illustrating a method of transmitting packets according to an exemplary embodiment of the present invention;
FIG. 3 is a flowchart illustrating a method of generating multiple DSG packets according to an exemplary embodiment of the present invention;
FIG. 4 is a flowchart illustrating a method of combining packets according to an exemplary embodiment of the present invention;
FIG. 5 is a diagram showing multiple DSG packets generated by combining DSG packets when data on a field used in combining the DSG packets received from a cable card is "Remove_Header_bytes=0", according to an exemplary embodiment of the present invention;
FIG. 6 is a diagram showing multiple DSG packets generated by combining DSG packets when data on a field used in combining the DSG packets received from a cable card is "Remove_Header_bytes=44", according to another exemplary embodiment of the present invention;
FIG. 7 is a diagram showing multiple DSG packets generated by combining DSG packets when data on a field used in combining the DSG packets received from a cable card is "Remove_Header_bytes=52", according to another exemplary embodiment of the present invention;
FIG. 8 is a diagram illustrating an apparatus for transmitting packets according to an exemplary embodiment of the present invention;
FIG. 9 is a detailed diagram of a multiple DSG packet generator of the apparatus of FIG. 8, according to an exemplary embodiment of the present invention;
FIG. 10 is a flowchart illustrating a method of authorizing content according to an exemplary embodiment of the present invention; and
FIG. 11 is a diagram illustrating an apparatus for authorizing content according to an exemplary embodiment of the present invention.

Hereinafter, the present invention will be described more fully with reference to the accompanying drawings, in which exemplary embodiments of the invention are shown.

Terms used in exemplary embodiments of the present invention are defined in OC-SP-CCIF2.0-103-051117 (CableCard interface 2.0 Specification), which are as follows.

A cable card is an apparatus for authorizing the authority and authentication of content usage to a host and is also called a point of deployment (POD).

A head end regulates a cable TV system and is the source of transmitting content and signals to a host.

Downstream means transmission of data from a head end to a host.

DOCSIS Settop Gateway (DSG) is an out-of-band channel receiving content using the DOCSIS protocol, which is a one-way communication path.

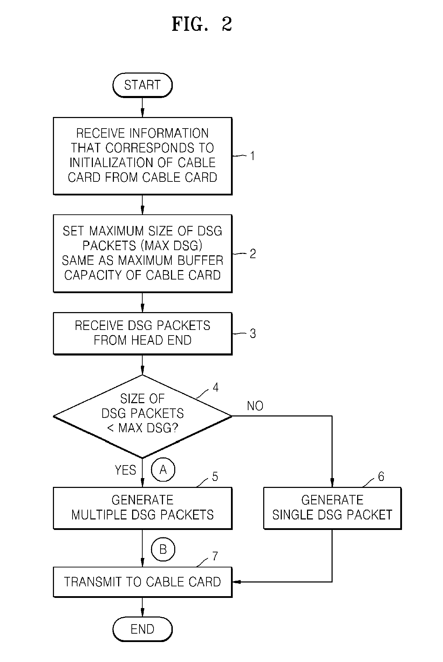

FIG. 2 is a flowchart illustrating a method of transmitting packets according to an exemplary embodiment of the present invention.

Referring to FIG. 2, the method of transmitting packets from a host to a cable card is performed in time sequence as described below. The method is performed in the host.

In operation 1, the host receives information that corresponds to an initialization of the cable card from the cable card. Here, the information that corresponds to the initialization of the cable card means information on performance of the cable card set up in the cable card during the initialization. After the host is initialized, the cable card is initialized. At this time, the host receives the information that corresponds to the initialization of the cable card from the cable card. The information that corresponds to the initialization of the cable card may be information that the cable card can receive data combined in several packets, information on the maximum buffer capacity of the cable card which shows the amount of data that can be stored and processed at once in the cable card, information on a field of DSG packets used in combining the DSG packets, or the like.

In operation 2, the host determines the size of the DSG packets so that it corresponds to the maximum buffer capacity of the cable card. The size of the DSG packets is used to determine the maximum size of the DSG packets which can be generated while the host combines the DSG packets. A reason for determining the maximum size of the DSG packets in the host is to prevent a problem of the cable card being unable to process the received DSG packets when the host transmits a quantity of DSG packets that is larger than the maximum buffer capacity of the cable card.

In operation 3, the host receives the DSG packets from the head end.

In operation 4, the host compares the size of DSG packets received from the head end in operation 3 and the maximum size of DSG packets set up in the host in operation 2. When the size of the DSG packets received from the head end is smaller than the maximum size of the DSG packets set up in the host, operation 5 is performed. When the size of the DSG packets received from the head end is larger than the maximum size of the DSG packets set up in the host, operation 6 is performed, which will be described later.

In operation 5, the host generates multiple DSG packets by combining several DSG packets. Here, the multiple DSG packets mean DSG packets generated by combining several DSG packets.

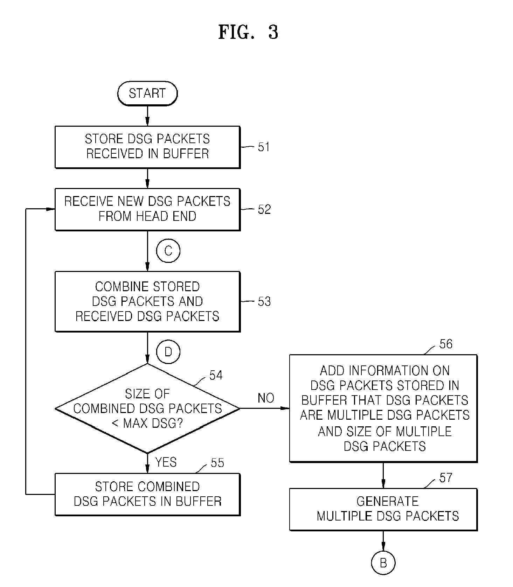

FIG. 3 is a flowchart illustrating a method of generating multiple DSG packets according to an exemplary embodiment of the present invention.

Referring to FIG. 3, the method of generating multiple DSG packets in a host is performed in time sequence as described below.

In operation 51, the host stores the DSG packets received from a head end in operation 3 of FIG. 2 in a buffer.

In operation 52, the host receives new DSG packets from the head end.

In operation 53, the host combines the DSG packets stored in the buffer and the DSG packets received in operation 52.

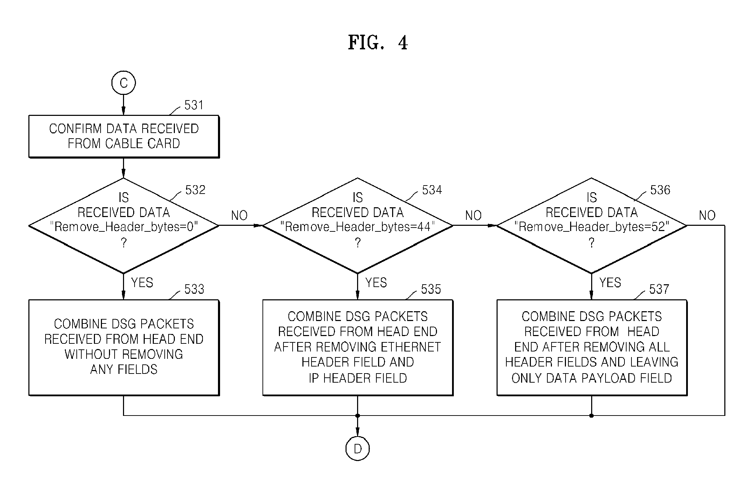

FIG. 4 is a flowchart illustrating a method of combining DSG packets according to an exemplary embodiment of the present invention.

Referring to FIG. 4, the method of combining DSG packets in a host is performed in time sequence as described below.

In operation 531, the host identifies data about a field of DSG packets used in combining the DSG packets from the information that corresponds to the initialization of the cable card received from operation 1 of FIG. 2. The host combines the DSG packets using the field of the DSG packets through the received data.

In operation 532, the host confirms whether the received data of the field from the cable card is "Remove_Header_bytes=0". In OC-SP-CCIF2.0-103-051117 (CableCard interface 2.0 Specification), "Remove_Header_bytes=0" means to transmit the DSG packets to the cable card without removing any fields from the DSG packets formed of header fields and a data payload field. When the received data from the cable card is "Remove_Header_bytes=0", the host performs operation 533. When the received data from the cable card is not "Remove_Header_bytes=0", the host performs operation 534.

In operation 533, the host combines the DSG packets received from the head end without removing any fields.

In operation 534, the host confirms whether the received data about the field from the cable card is "Remove_Header_bytes=44". In OC-SP-CCIF2.0-103- 051117 (CableCard interface 2.0 Specification), "Remove_Header_bytes=44" means to transmit the DSG packets to the cable card after removing an Ethernet field and an IP header from the DSG packets formed of header fields and a data payload field. When the received data from the cable card is "Remove_Header_bytes=44", the host performs operation 535. When the received data from the cable card is not "Remove_Header_bytes=44", the host performs operation 536.

In operation 535, the host combines the DSG packets formed of only an UDP (User Datagram Protocol) header field and a data payload field received from the head end after removing an Ethernet header field and an IP header field.

In operation 536, the host confirms whether the received data about the field from the cable card is "Remove_Header_bytes=52". In OC-SP-CCIF2.0-103- 051117 (CableCard interface 2.0 Specification), "Remove_Header_bytes=52" means to transmit the DSG packets formed of only a data payload field to the cable card, after removing all header fields from the DSG packets formed of header fields, and a data payload field. Since the received data is one of "Remove_Header_ bytes=0", "Remove_Header_bytes=44", or "Remove_Header_bytes=52", when the host confirms the received data is "Remove_Header_bytes=52", the host performs operation 537.

In operation 537, the host removes all the header fields and combines the DSG packets only formed of the data payload field.

Referring to FIG. 3, in operation 54, the host compares the size of the DSG packets combined in operation 53 and the maximum size of the DSG packets set up in operation 2 of FIG. 2. When the size of the DSG packets combined in operation 53 is smaller than the maximum size of the DSG packets set up in operation 2 of FIG. 2, the host performs operation 55. When the size of the DSG packets combined in operation 53 is bigger than the maximum size of the DSG packets set up in operation 2 of FIG. 2, the host performs operation 56.

In operation 55, the host stores the DSG packets combined in operation 53 in the buffer and performs operation 52 again. That is, the host receives new DSG packets from the head end and combines the new DSG packets with the combined DSG packets stored in the buffer in operation 55. Accordingly, the size of the DSG packets gets bigger. The host performs operation 54 again to compare the size of the DSG packets combined and the maximum size of the DSG packets. The host repeats operations 52 to 55 until the size of the DSG packets combined in operation 54 is bigger than the maximum size of the DSG packets. When the size of the DSG packets combined in operation 54 is bigger than the maximum size of the DSG packets, the host performs operation 56.

In operation 56, the host adds information to the DSG packets stored in the buffer that the DSG packets are multiple DSG packets and the size of the multiple DSG packets. When the host performs operation 56 after operation 54, since operation 55 is not performed, the DSG packets used in the multiple DSG packets becomes combined DSG packets having the maximum value from among the value smaller than the maximum size of the DSG packets.

In operation 57, the host completes generating the multiple DSG packets and performs operation 7 in FIG. 2.

Referring to FIG. 2, in operation 6, the host generates a single DSG packet using the DSG packets first received and then performs operation 7.

In operation 7, the host transmits the multiple DSG packets generated in operation 5 to the cable card. Also, in operation 7, the host transmits the single DSG packet generated in operation 6 to the cable card.

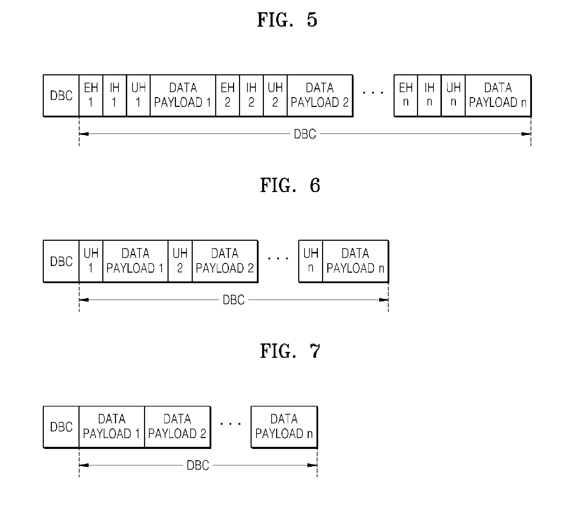

FIG. 5 is a diagram showing multiple DSG packets generated by combining DSG packets when data on a field used in combining the DSG packets received from a cable card is "Remove_Header_bytes=0", according to an exemplary embodiment of the present invention.

Referring to FIG. 5, the multiple DSG packets according to the current exemplary embodiment of the present invention are combined without removing any header fields or a data payload field.

DBC (DSG byte count) is a field showing the size of the DSG packets, and accordingly, is the whole size of the combined DSG packets. Here, each DSG packet is formed of an Ethernet header field, an IP header field, an UDP header field, and a data payload field. Thus, the whole size of the combined DSG packets comprises an Ethernet header field, an IP header field, an UDP header field, and a data payload field in each DSG packet.

FIG. 6 is a diagram showing multiple DSG packets generated by combining DSG packets when data on a field used in combining the DSG packets received from a cable card is "Remove_Header_bytes=44", according to another exemplary embodiment of the present invention.

Referring to FIG. 6, the multiple DSG packets, according to the current exemplary embodiment of the present invention, are combined using only an UDP header field and a data payload field, after removing an Ethernet header field and an IP header field.

DBC is a field showing the size of the DSG packets, and accordingly, is the whole size of the combined DSG packets. Here, each DSG packet is formed of an UDP header field and a data payload field. Thus, the whole size of the combined DSG packets comprises an UDP header field and a data payload field in each DSG packet.

FIG. 7 is a diagram showing multiple DSG packets generated by combining DSG packets when data on a field used in combining the DSG packets received from a cable card is "Remove_Header_bytes=52", according to another exemplary embodiment of the present invention.

Referring to FIG. 7, the multiple DSG packets according to the current exemplary embodiment of the present invention are combined using only a data payload field, after removing all header fields.

DBC is a field showing the size of the DSG packets, and accordingly, is the whole size of the combined DSG packets. Here, each DSG packet is formed of only a data payload field. Thus, the whole size of the combined DSG packets comprises a data payload field in each DSG packet.

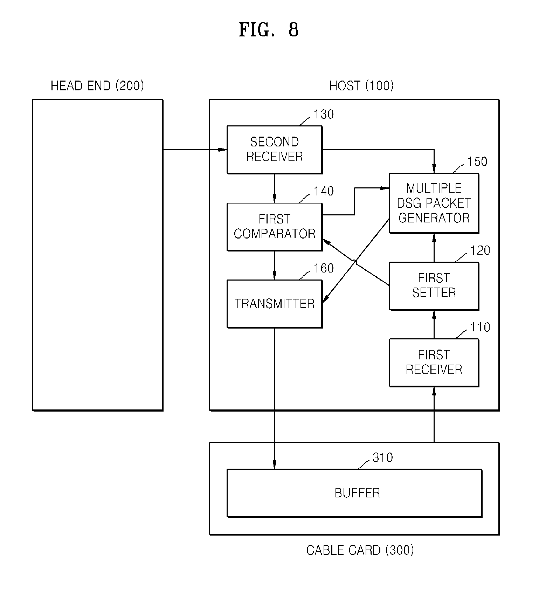

FIG. 8 is a diagram illustrating an apparatus for transmitting packets according to an exemplary embodiment of the present invention.

Referring to FIG. 8, the apparatus for transmitting packets according to the current exemplary embodiment of the present invention comprises a first receiver 110, a first setter 120, a second receiver 130, a first comparator 140, a multiple DSG packet generator 150, and a transmitter 160.

The first receiver 110 receives information that corresponds to an initialization of the cable card 300 from the cable card 300. Here, the information that corresponds to the initialization of the cable card 300 comprises the information on performance of the cable card 300 set up in the cable card 300 during the initialization. The information that corresponds to the initialization of the cable card 300 may be information that the cable card 300 can receive data combined in several packets, information on the maximum capacity of a buffer 310 of the cable card 300 which shows the amount of data that can be stored and processed at once in the cable card 300, information on a field of DSG packets used in combining the DSG packets, or the like. The first receiver 110 transmits information on the maximum capacity of the buffer 310 of the cable card 300 which shows the amount of data that can be stored at once in the cable card 300 from the information that corresponds to the initialization of the cable card 300 to the first setter 120.

The first setter 120 sets the maximum size of DSG packets to be the maximum capacity of the buffer 310 of the cable card 300 based on the information received from the first receiver 110 on the maximum capacity of the buffer 310 of the cable card 300 which shows the amount of data that can be processed in the cable card 300. The first setter 120 transmits the set maximum size of the DSG packets to the first comparator 140 and the multiple DSG packet generator 150.

The second receiver 130 receives the DSG packets from the head end 200, and transmits the received DSG packets to the first comparator 140. Also, the second receiver 130 transmits new DSG packets to the multiple DSG packet generator 150 whenever the second receiver 130 receives the new DSG packets from the head end 200.

The first comparator 140 compares the size of the DSG packets received from the second receiver 130 and the maximum size of the DSG packets received from the first setter 120. When the size of the DSG packets received from the second receiver 130 is bigger than the maximum size of the DSG packets received from the first setter 120, the first comparator 140 transmits the DSG packets received to the transmitter 160. When the size of the DSG packets received from the second receiver 130 is smaller than the maximum size of the DSG packets received from the first setter 120, the first comparator transmits the DSG packets received to the multiple DSG packet generator 150.

The multiple DSG packet generator 150 generates multiple DSG packets by combining the DSG packets received from the first comparator 140 and the second receiver 130.

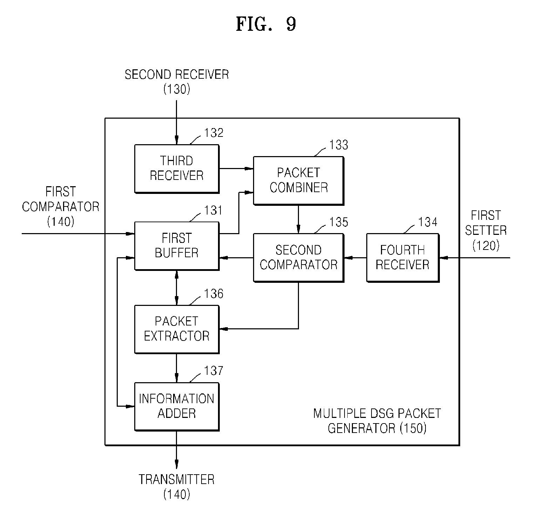

FIG. 9 is a detailed diagram of the multiple DSG packet generator 150 according to an exemplary embodiment of the present invention.

Referring to FIG. 9, the multiple DSG packet generator 150 according to the current exemplary embodiment of the present invention comprises a first buffer 131, a third receiver 132, a packet combiner 133, a fourth receiver 134, a second comparator 135, a packet extractor 136, and an information adder 137.

The first buffer 131 stores DSG packets received from the first comparator 140 and transmits the stored DSG packets to the packet combiner 133.

The third receiver 132 receives new DSG packets from the second receiver 130 and transmits the new DSG packets to the packet combiner 133. The packet combiner 133 combines the received DSG packets from the first buffer 131 and the third receiver 132 and transmits the combined DSG packets to the second comparator 135. The above process is repeated until the second comparator 135 determines that the size of the combined DSG packets is bigger than the maximum size of the DSG packets.

The packet combiner 133 combines the DSG packets received from the first buffer 131 and the DSG packets received from the third receiver 132. Accordingly, the combined DSG packets are transmitted to the second comparator 135.

The fourth receiver 134 receives information on the maximum size of the DSG packets set by a first setter 120 and transmits the information to the second comparator 135.

The second comparator 135 compares the size of the combined DSG packets received from the packet combiner 133 and the maximum size of the DSG packets received from the fourth receiver 134. When the size of the combined DSG packets is smaller than the maximum size of the DSG packets, the combined DSG packets are transmitted to the first buffer 131. When the size of the combined DSG packets is bigger than the maximum size of the DSG packets, the second comparator 135 informs the packet extractor 136 to generate multiple DSG packets.

Referring to the first buffer 131 again, the first buffer 131 stores the combined DSG packets received from the second comparator 135 and transmits the stored DSG packets to the packet combiner 133. The above process is repeated until the packet extractor 136 requests to send information on the stored DSG packets to the first buffer 131.

Referring to the packet combiner 133 again, the packet combiner 133 combines the new DSG packets received from the third receiver 132 and the DSG packets received from the first buffer 131 and then transmits the combined DSG packets to the second comparator 135. The above process is repeated until the second comparator 135 determines that the size of the combined DSG packets is bigger than the maximum size of the DSG packets.

Referring to the second comparator 135 again, the second comparator 135 compares the size of the combined DSG packets received from the packet combiner 133 and the maximum size of the DSG packets received from the fourth receiver 134. When the size of the combined DSG packets is smaller than the maximum size of the DSG packets, the second comparator 135 transmits the combined DSG packets to the first buffer 131. When the size of the combined DSG packets is larger than the maximum size of the DSG packets, the second comparator 135 informs the packet extractor 136 to generate multiple DSG packets. The above process is repeated until the size of the combined DSG packets is bigger than the maximum size of the DSG packets.

When the packet extractor 136 receives information to generate multiple DSG packets from the second comparator 135, the packet extractor 136 requests the first buffer 131 to transmit the stored DSG packets, extracts the stored DSG packets, and transmits the extracted DSG packets to the information adder 137.

The information adder 137 generates multiple DSG packets after adding information to the received DSG packets from the packet extractor 136 that the DSG packets are multiple DSG packets and the size of the multiple DSG packets. Accordingly, the information adder 137 transmits the generated multiple DSG packets to the transmitter 160 of FIG. 8. At this time, the information on the size of the combined DSG packets is extracted from the first buffer 131.

Referring to FIG. 8, when the transmitter 160 receives the DSG packets from the first comparator 140, the transmitter 160 transmits the received DSG packets to the cable card 300. Also, when the transmitter 160 receives the multiple DSG packets from the multiple DSG packet generator 150, the transmitter 160 transmits the multiple DSG packets to the cable card 300.

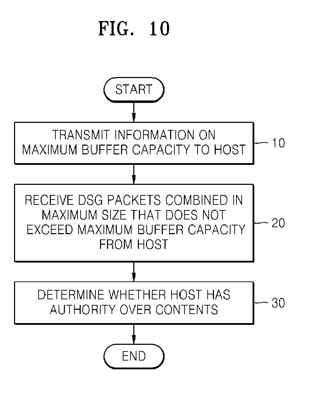

FIG. 10 is a flowchart illustrating a method of authorizing content according to an exemplary embodiment of the present invention.

Referring to FIG. 10, the method of authorizing content according to the current exemplary embodiment of the present invention is performed in time sequence. The method is performed in a host.

In operation 10, a cable card measures the maximum buffer capacity of the cable card showing the amount of data that can be processed at once in the cable card in the buffer and transmits the information to the host.

In operation 20, the cable card receives DSG packets combined in the biggest size possible that does not exceed the maximum buffer capacity of the cable card from the host.

In operation 30, the cable card separates the combined DSG packets. Through the information extracted from the separated DSG packets, the cable card determines whether the host has an authorization over the content of the separated DSG packets.

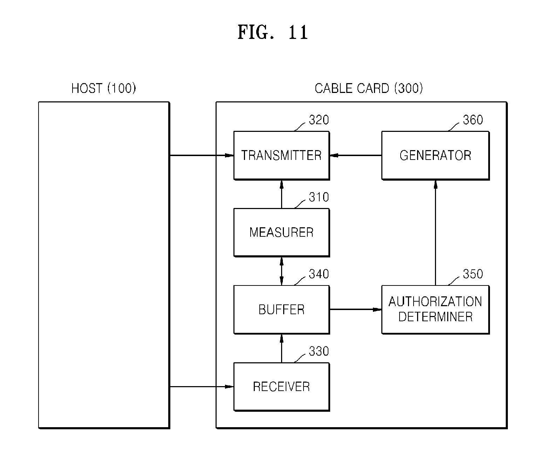

FIG. 11 is a diagram illustrating an apparatus for authorizing content according to an exemplary embodiment of the present invention.

Referring to FIG. 11, the apparatus for authorizing content according to the current exemplary embodiment of the present invention includes a measurer 310, a transmitter 320, a receiver 330, a buffer 340, an authorization determiner 350, and a generator 360.

The measurer 310 measures the maximum capacity of the buffer 340 of the cable card 300 from the buffer 340 and transmits the information on the maximum capacity of the buffer 340 to the transmitter 320.

The transmitter 320 transmits the information on the maximum capacity of the buffer 340 to the host 100.

The receiver 330 receives DSG packets combined in the biggest size possible that does not exceed the maximum capacity of the buffer 340 from the host 100 and transmits the combined DSG packets to the buffer 340.

The buffer 340 temporarily stores the combined DSG packets received from the receiver 330 and then transmits the stored DSG packets to the authorization determiner 350 when the amount of stored DSG packets exceeds the maximum capacity of the buffer 340.

The authorization determiner 350 separates the DSG packets received from the buffer 340, and then determines whether the host 100 has an authorization over content of the DSG packets based on information extracted from each DSG packet. Then, the result of authorization determined by the authorization determiner 350 is transmitted to the generator 360.

The generator 360 generates data to be transmitted to the host 100 based on the result of authorization from the authorization determiner 350. Accordingly, the data generated is transmitted to the host 100 through the transmitter 320.

The present invention provides a method and apparatus for effectively transmitting packets, in which a massive amount of DSG data can be transmitted from a host to a cable card at once by combining the DSG data and can reduce overload in a host caused by the inability to transmit data from a head end. In other words, the present invention provides a method and apparatus in which all data is transmitted from the head end to the cable card for a smooth broadcasting service by solving the inability to transmit all of the data from the head end to the cable card.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transmitting packets in a host, the method comprising:
receiving information based on a data processing capacity of a card connected to the host from the card; and
transmitting packets received from a content provider to the card after combining the packets based on the received information.

2. The method of claim 1, wherein the transmitting of the packets comprises transmitting packets received from a content provider to the card after combining the packets in a maximum size possible that does not exceed the data processing capacity of the card based on the received information.

3. The method of claim 2, wherein the receiving of the information comprises receiving information on whether the card can receive data in a combined packet form, and the transmitting of the packets further comprises transmitting packets received from a content provider to the card after combining the packets in the maximum size possible that does not exceed the data processing capacity of the card when the card can receive data in a combined packet form.

4. The method of claim 2 or claim 3, wherein the transmitting of the packets comprises comparing a size of the data processing capacity of the card and a size of received packets, and when the size of received packets is smaller than the size of the data processing capacity, transmitting the received packets to the card after combining the received packets in the maximum size possible that does not exceed the data processing capacity of the card.

5. The method of any one of claims 2 to 4, wherein the receiving of the information comprises receiving data which defines a field of packets used in combining packets, and the transmitting of the packets comprises transmitting packets after combining the packets in the maximum size possible that does not exceed the data processing capacity of the card, using the field of packets that corresponds to the received data.

6. The method of claim 5, wherein the transmitting of the packets comprises transmitting packets to the card after combining the packets without removing a header field of the packets when the received data does not specify that any field of the packets is to be removed.

7. The method of claim 5, wherein the transmitting of the packets further comprises transmitting packets to the card after removing an Ethernet header field and an IP header field of the packets and then combining the packets, when the received data specifies that the Ethernet header field and the IP header field are to be removed.

8. The method of claim 5, wherein the transmitting of the packets further comprises transmitting packets to the card after removing an Ethernet header field, an IP header field, and an UDP (User Datagram Protocol) header field of the packets and then combining the packets, when the received data specifies that all header fields are to be removed.

9. The method of any one of claims 2 to 8, wherein the transmitting of the packets further comprises adding information to the data that the data is combined from several packets.

10. A computer readable recording medium having a program recorded thereon to execute the method of any one of claims 1 to 9 in a computer.

11. A method of combining packets in a host, the method comprising:
receiving information based on a data processing capacity of a card connected to the host and data which defines a field of packets used in combining packets from the card; and
combining the packets in a maximum size possible that does not exceed the data processing capacity of the card, using the field of packets that corresponds to the received data.

12. A computer readable recording medium having a program recorded thereon to execute the method of claim 11 in a computer.

13. An apparatus for transmitting packets in a host, the apparatus comprising:
a first receiver which is operable to receive information on a data processing capacity of a card connected to the host from the card;
a second receiver which is operable to receive packets from a content provider;
a packet combiner which is operable to combine the packets received from the second receiver based on the information received from the first receiver; and
a transmitter which is operable to transmit the packets generated in the packet combiner to the card.

14. The apparatus of claim 13, wherein the packet combiner is operable to combine the packets received from the second receiver in a maximum size possible that does not exceed the data processing capacity of the card based on the information received from the first receiver.

15. The apparatus of claim 14, wherein the first receiver is further operable to receive information on whether the card can receive data in a combined packet form, and the packet combiner is operable to combine the packets received from the second receiver in the maximum size which does not exceed the data processing capacity of the card when the card can receive data in a combined packet form.

16. The apparatus of claim 14 or claim 15, wherein the packet combiner further comprises a comparator which is operable to compare the data processing capacity of the card received from the first receiver and a size of the packets received from the second receiver, and when the size of received packets is smaller than the data processing capacity of the card, the packet combiner is operable to combine the received packets in the maximum size possible that does not exceed the data processing capacity of the card.

17. The apparatus of any one of claims 14 to 16, wherein the first receiver is further operable to receive data which defines a field of packets used in combining packets, and the packet combiner is operable to combine the packets in the maximum size which does not exceed the data processing capacity of the card, using the field of packets that corresponds to the received data.

18. The apparatus of claim 17, wherein the packet combiner is operable to combine the packets without removing a header field of the packets when the received data from the first receiver does not specify that any field of the packets is to be removed.

19. The apparatus of claim 17, wherein the packet combiner is operable to combine the packets after removing an Ethernet header field and an IP header field when the received data from the first receiver specifies that the Ethernet header field and the IP header field are to be removed.

20. The apparatus of any one of claims 17 to 19, wherein the packet combiner is operable to combine the packets after removing an Ethernet header field, an IP header field, and an UDP (User Datagram Protocol) header field when the received data from the first receiver specifies that all header fields are to be removed.

21. The apparatus of any one of claims 14 to 20, wherein the packet combiner further comprises an information adder which is operable to add information to the data that the data is combined from several packets.

22. A method of authorizing content in a card, the method comprising:
transmitting information on a data processing capacity of the card to a host connected to the card;
receiving packets combined in a maximum size possible that does not exceed the data processing capacity of the card from the host; and
authorizing the content after determining whether the host has an authorization of the content using information on the received packets.

23. A computer readable recording medium having a program recorded thereon to execute the method of claim 22 in a computer.

24. An apparatus for authorizing content in a card, the apparatus comprising:
a transmitter which is operable to transmit information on the data processing capacity of the card to a host connected to the card;
a receiver which is operable to receive packets combined in a maximum size possible that does not exceed a data processing capacity of the card from the host; and
an authorization determiner which is operable to authorize the content after determining whether the host has an authorization of the content using information on the received packets.
